# EUROPÄISCHE PATENTSCHRIFT

(11) **EP 2 595 091 B1**
(45) Veröffentlichungstag und Bekanntmachung des Hinweises auf die Patenterteilung: **02.07.2014**
(21) Anmeldenummer: 13152207.0
(22) Anmeldetag: 28.03.2008
(51) Int. Cl.: G06K 9/00, G06K 9/20, G08G 1/16, B60R 25/30

(54) **Kraftfahrzeug**
Motor vehicle
Véhicule automobile

(30) Priorität: 14.05.2007 DE 102007022524
(43) Veröffentlichungstag der Anmeldung: 22.05.2013
(62) Teilanmeldung aus: 08734836.3
(73) Patentinhaber: Bayerische Motoren Werke Aktiengesellschaft, 80809 München (DE)
(72) Erfinder: Augst, Alexander, 80937 Muenchen (DE)

(56) Entgegenhaltungen:
- TAKAYUKI NISHI ET AL: "Collision avoidance system using laser beams", IMAGE AND VISION COMPUTING, 1. Januar 2005 (2005-01-01), XP055025157, ISSN: 0262-8856
- KARIN SOBOTTKA ET AL: "Towards Smarter Cars", 1. Januar 2007 (2007-01-01), SENSOR BASED INTELLIGENT ROBOTS LECTURE NOTES IN COMPUTER SCIENCE;LECTURE NOTES IN ARTIFICIAL INTELLIG ENCE;LNCS, SPRINGER, BERLIN, DE, PAGE(S) 120 - 139, XP019048471, ISBN: 978-3-540-66933-3 * Zusammenfassung *

## Beschreibung

Die Erfindung betrifft ein Kraftfahrzeug.

Aus der US 6285778 ist ein Kraftfahrzeugumgebungsdetektor bekannt, bei dem ein zweidimensionales Matrixmuster, insbesondere eine Punkt-Matrix, in einen zu beobachtenden Bereich projiziert wird, und das entsprechende Lichtmuster fotografiert wird. Ein Vergleich zwischen fotografiertem Lichtmuster und abgespeichertem Referenzmuster, das dem Lichtmuster auf einer flachen Straße entspricht, bildet die Basis für die Erkennung von Hindernissen.

Diese Lösung hat folgende Nachteile: Um ein zweidimensionales Lichtmuster zu generieren, das zur Detektion der Hindernisse in einem bestimmten Bereich dient, muss es auf die gesamte zu sensierende Fläche abgestrahlt werden. Hierfür ist eine relativ hohe Lichtleistung erforderlich. Zwischen den Punkten des Lichtmusters können kleine Hindernisse unerkannt bleiben. Bei größeren Hindernissen ist die Zuordnung der erfassten Position der Punkte zu den Sollpositionen problematisch. Der Vergleich zwischen fotografiertem flächendeckendem zweidimensionalem Lichtmuster und abgespeichertem zweidimensionalem Referenzmuster zur Erfassung von Hindernissen ist außerdem rechenintensiv. Eine eindeutige Zuordnung der einzelnen Punkte im fotografierten Lichtmuster zu ihren entsprechenden Sollpositionen ist nicht immer möglich. Bei der Überschneidung der Muster zweier benachbarter Fahrzeuge mit dem gleichen System können die Lichtmuster eines Fahrzeuges die des anderen Fahrzeuges beeinflussen. Es ist keine sinnvolle Möglichkeit angegeben, die Vorrichtung in das Kraftfahrzeug zu integrieren.

Aus Nishi. T. et al., "Collision Avoidance System Using Laser Beams", Image and Vision Computing (2005) ist ebenfalls ein System bekannt, welcher Hindernisse aufgrund von projizierten Laserpunktmustern detektiert.

Der Erfindung liegt daher die Aufgabe zugrunde, eine technische Lehre zum Erkennen von Hindernissen in einer Fahrzeugumgebung anzugeben, die ökonomisch realisierbar ist.

Diese Aufgabe wird durch die Merkmale des unabhängigen Anspruchs gelöst. Vorteilhafte Weiterbildungen der Erfindung sind den abhängigen Ansprüchen zu entnehmen.

Ein erfindungsgemäßes Kraftfahrzeug weist dabei die Merkmale des Anspruchs 1 auf.

Dadurch, dass die Hindernis-Erkennung auf einer Differenz zwischen nacheinander erfassten Abbildern des Strahlungsmusters basiert, ist die Hindernis-Erkennung einfach in die Praxis umsetzbar. Ein vorab bei der Herstellung abgespeichertes Referenzmuster ist nicht unbedingt erforderlich, kann aber für weitere Zwecke dennoch vorgesehen sein. Dadurch kann die Erfindung ökonomisch in die Praxis umgesetzt werden. Auch die Zuverlässigkeit einer Hinderniserfassung kann dadurch verbessert werden.

Die Abbildungseinrichtung kann dabei eine elektromagnetische Strahlungsquelle, wie einen Laser, für insbesondere sichtbare Strahlung oder Infrarotstrahlung und/oder eine geeignete Abbildungsoptik, beispielsweise mit einer zylindrischen Linse zur Erzeugung einer durchgezogenen Linie als Strahlungsmuster, umfassen.

Das Strahlungsmuster ist vorzugsweise im Wesentlichen streifenförmig, beispielsweise als eine gekrümmte Linie oder als eine aus mehreren Segmenten bestehende Abgrenzung, ausgestaltet. Nach einer bevorzugten Ausgestaltung ist die Abbildungseinrichtung derart eingerichtet, dass das Abbild des Strahlungsmusters einen im Wesentlichen geschlossenen Ring um das Kraftfahrzeug bildet. Alternativ dazu umgibt das Strahlungsmuster das Kraftfahrzeug teilweise.

Dadurch ist ein Abbild des Strahlungsmusters mit geringem Hardwareaufwand und geringem Energieaufwand zuverlässig wiederholt erzeugbar. Die Erfassung von Abbildern des Strahlungsmusters, von Differenzen zwischen Abbildern und damit von Hindernissen ist mit geringem Rechenaufwand zuverlässig möglich.

Vorteilhafterweise ist vorgesehen, dass die Erfassungseinrichtung, welche die Abbildung der beispielsweise Linien in der Umgebung des Fahrzeuges erfasst, mit der entsprechenden Strahlungsquelle synchronisiert wird. Hierdurch wird ein energiesparender gepulster Betrieb ermöglicht.

Bei der Erfassungseinrichtung kann es sich beispielsweise um eine auf die Wellenlänge der Abbildungseinrichtung, insbesondere deren Strahlungsquelle, angepasste digitale Kamera handeln. Zwischen unmittelbar aufeinander folgenden Erfassungen des Abbildes des Strahlungsmusters können beispielsweise zwischen 10 Millisekunden und 3 Sekunden liegen. Die Zeit dazwischen kann von der aktuellen Fahrzeuggeschwindigkeit abhängen, beispielsweise, derart dass jeweils mit einer Bewegung des Kraftfahrzeuges um 0,1 Meter automatisch die Erfassung eines Abbildes des Strahlungsmusters ausgelöst wird.

Vorzugsweise wird bei der Erkennung des Strahlungsmusters durch die Prozessoreinrichtung die Segmentierung im Sinne der Bildverarbeitung anhand der speziellen Eigenschaften des Strahlungsmusters, beispielsweise der Leuchtstärke, Wellenlänge, und/oder Linienbreite durchgeführt.

Vorteilhafterweise wird anhand der gewonnenen Informationen eine elektronische Hinderniskarte erstellt. Diese kann in eine vom Fahrer eines Fahrzeuges leicht interpretierbare Form gebracht und beispielsweise am Fahrzeugbildschirm oder einem Head-Up-Display dargestellt werden. Basierend auf der Detektion eines Hindernisses kann ein optisches oder akustisches Warnsignal ausgegeben werden.

Bevorzugt ist vorgesehen, dass auf der Basis der Krümmung des Strahlungsmusters an den Hindernissen nicht nur deren Entfernung und die Richtung relativ zum Koordinatensystem des Kraftfahrzeuges festgestellt werden, sondern anhand des Vergleichs mehrerer aufeinander folgender Erfassungen auch ihre Relativgeschwindigkeiten zu den Fahrzeugkoordinaten errechnet werden.

Vorteilhafterweise kann aus der Relativgeschwindigkeit der Hindernisse in den Koordinaten des Fahrzeuges und der Kenntnis der Fahrzeuggeschwindigkeit relativ zur Fahrbahn die Geschwindigkeit der Hindernisse relativ zur Fahrbahn errechnet werden. Auf diese Weise kann ein Kraftfahrzeug statische Hindernisse, beispielsweise Fahrbahnbegrenzungen, von den beweglichen Hindernissen, beispielsweise ein Fußgänger, der die Fahrbahn vor dem Fahrzeug überqueren möchte, unterscheiden. Diese Unterscheidung hat eine essentielle Bedeutung bei der Gestaltung von Algorithmen beispielsweise für Kollisionsvermeidung, Fußgängerschutz und/oder für Pre-Crash-Algorithmen.

Vorzugsweise kann die Fahrzeugdynamik des Fahrzeuges anhand von gewonnenen Informationen über die Umgebung des Kraftfahrzeuges beeinflusst werden. Dies kann als automatisches Bremsen vor Hindernissen, falls sich diese in der vorausberechneten Trajektorie des Fahrzeuges befinden und/oder als Ausweichen hinsichtlich erkannter Hindernisse ausgestaltet sein.

Besonders bevorzugt umfasst die Abbildungseinrichtung einen Infrarot-Laserstrahler, der mit einer speziellen Optik ausgestaltet ist, die den Laserstrahl optisch derart transformiert, dass dieser aus seiner Einbauposition im Kraftfahrzeug auf eine hindernisfreie gerade Fahrbahn gerichtet eine gerade oder gekrümmte Linie erzeugt. Als Optik kann beispielsweise eine gekrümmte zylindrische Linse eingesetzt werden.

Alternativ dazu kann ein Laserstrahl mittels eines rotierenden Spiegels oder beispielsweise mittels eines durch einen Piezowandler bewegten optischen Elements in eine schnelle Bewegung versetzt werden, so dass der eindimensionale Laserstrahl eine zweidimensionale Figur in der Umgebung eines Kraftfahrzeuges erzeugt.

Vorzugsweise ist die Abbildungseinrichtung derart eingerichtet, dass das Abbild des Strahlungsmusters bei Annahme einer sich nicht ändernden Umgebung relativ zum Kraftfahrzeug im Koordinatensystem des Kraftfahrzeuges ruht oder mit dem Kraftfahrzeug mitbewegt wird. Im Gegensatz zur bekannten LIDAR-Technologie ist somit für die Hinderniserkennung keine präzise kontrollierte Ablenkung des Strahls in zwei Richtungen erforderlich. Das Strahlungsmuster bewegt sich zusammen mit dem Fahrzeug. Die Zeitpunkte zur Erfassung des aktuellen Abbildes des Strahlungsmusters können aus der Bewegung des Fahrzeuges, die beispielsweise mittels Radsensoren erfasst wird, automatisch errechnet werden. Dadurch ist es auch nicht zwingend notwendig, die Fahrzeugumgebung flächendeckend mit einer Punkte-Matrix zu bestrahlen und zu sensieren. Die erforderlichen Informationen über die Position, Größe und ggf. Eigengeschwindigkeit des Fahrzeuges können mit Hilfe der Eigengeschwindigkeit des Fahrzeugen bzw. einer Drehung der Tür beim Öffnen gewonnen werden, sobald diese vom Strahlungsmuster getroffen werden.

Vorzugsweise basiert die Erkennung eines Hindernisses auf dem Vergleich der Verschiebung des Abbildes des Strahlungsmusters und der Verschiebung sonstiger Texturen und / oder Kanten in dem durch die Erfassungseinrichtung erfassten Bild der Umgebung. Es ist vorzugsweise vorgesehen, dass, falls an bestimmten Stellen des erfassten Bildes eine deutlich abweichende Verschiebung oder Krümmung der Abbildung des Strahlungsmusters relativ zu den aus dem erfassten Bild der Umgebung extrahierten Kanten stattfindet, vom Vorhandensein von Hindernissen ausgegangen werden kann.

Vorteilhafterweise sind die Abbildungseinrichtung und die Erfassungseinrichtung beabstandet voneinander angeordnet. Erst dadurch wird die Veränderung der Form des Abbilds des Strahlungsmusters an Hindernissen erfassbar. Insbesondere sind die Abbildungseinrichtung und die Erfassungseinrichtung übereinander angeordnet und in vertikaler Richtung beispielsweise 10 cm entfernt voneinander angeordnet.

Vorzugsweise wird bei einem abgesperrten Kraftfahrzeug basierend auf dem Unterschied zwischen zeitlich mittelbar oder unmittelbar aufeinander folgend erfassten Abbildern des Strahlungsmusters eine Diebstahlgefahr oder Vandalismusgefahr angenommen und ein entsprechendes Warnsignal generiert, das beispielsweise optisch und/oder akustisch direkt am Kraftfahrzeug ausgegeben werden kann oder nach einer Nachrichtenübertragung vom Fahrzeug zu einer entfernten Einheit, beispielsweise über ein Mobilfunksystem, an der entfernten Einheit ausgegeben wird.

Durch einen relativ geringen Stromverbrauch der Einrichtung gegenüber den Systemen, die eine deutlich stärkere Ausleuchtung der Umgebung erfordern, kann das System insbesondere in einem gepulsten Betrieb als Ersatz oder Unterstützung einer Diebstahl-Warn-Anlage wirken.

Anhand der erfassten Veränderung des Abbildes des Strahlungsmusters, beispielsweise einer Linie, von einem Pulstakt auf den anderen wird vorzugsweise nicht nur die Verletzung einer Sicherheitszone, sondern auch eine Objektklassifikation durchgeführt. Beispielsweise kann die Annäherung eines Fußgängers von der Annäherung eines anderen Kraftfahrzeuges automatisch unterschieden werden, da diese zu unterschiedlichen Krümmungen des Sicherheitsrings führen. Eine solche Ausgestaltung bietet einen Vorteil gegenüber einer konventionellen Diebstahl-Warn-Anlage, die keine Klassifikation der Objekte durchführen kann.

Eine bevorzugte Weiterbildung sieht vor, dass ein dem Kraftfahrzeug zugeordnetes oder ein von dem Kraftfahrzeug bzw. der zugehörigen Abbildungseinrichtung stammendes Strahlungsmuster dadurch erkannt wird oder von dem Strahlungsmuster eines anderen Kraftfahrzeuges dadurch separierbar ist, dass das erfasste Abbild hinsichtlich seiner Gestalt, insbesondere hinsichtlich seiner Krümmung (konvex oder konkav), dem erzeugten Abbild entspricht.

Eine klare Unterscheidbarkeit der Abbildung des Strahlungsmusters des eigenen Fahrzeugs aus der Perspektive seiner Erfassungseinrichtung von der Abbildung des Strahlungsmusters eines anderen Fahrzeuges mit dem gleichen System bietet einen bedeutenden Vorteil gegenüber dem bekannten Stand der Technik.

Vorteilhafterweise kann die Abbildungseinrichtung, insbesondere für die seitlich zum Fahrzeug liegenden Umgebungsabschnitte, kostengünstig und funktionell in einem Türgriff, beispielsweise zusammen mit der Vorfeldbeleuchtung des Fahrzeuges, verbaut werden. Vorzugsweise kann die Erfassungseinrichtung, insbesondere für die seitlich zum Fahrzeug liegenden Umgebungsabschnitte, in einem Seitenspiegel des Kraftfahrzeuges verbaut werden. Zur Erfassung und Weiterverarbeitung der Abbildung des Strahlungsmusters kann ein bestehendes Top-View-Kamerasystem benutzt werden oder mit diesem zusammen verbaut werden. Bei der Top-View-Kamera handelt es sich vorzugsweise um ein System zur Darstellung eines geometrisch transformierten Kamerabildes von seitlich zum Fahrzeug liegenden Umgebungsabschnitten für den Fahrer. Die Abbildungseinrichtung für den vorderen Bereich des Fahrzeuges wird vorzugsweise kostengünstig und funktionell in einem Zierelement, beispielsweise einem Markenemblem, verbaut. Das Strahlungsmuster kann dabei mittels eines, insbesondere aufklappbaren, Spiegels und / oder Prismas umgelenkt werden.

Die Umlenkung des Strahlungsmusters in einem Spiegel ist sehr vorteilhaft insbesondere hinsichtlich der besseren Erfüllung von Sicherheitsstandards zum Einsatz der Lasertechnik im Kraftfahrzeug. Dadurch kann die Austrittsoptik des Lasers von außen unzugänglich, innerhalb des Fahrzeugs verbaut werden. Somit ist es nicht möglich, direkt in diese zu Blicken, was bei einer relativ hohen Abgestrahlten Leistung zu möglichen Netzhautschäden führen könnte. Die in einem Umlenkspiegel reflektierte Strahlung, die erfindungsgemäß bspw. als eine Linie in die Umgebung des Fahrzeuges ausgestrahlt wird, ist sogar bei einem unmittelbaren Blick in den Spiegel weitgehend ungefährlich da der Strahlungsfluss in einem bestimmten Abstand von der Linsenoptik bereits relativ weit gefächert ist und eine sehr viel kleinere Lichtleistung pro Flächeneinheit beispielsweise auf der Netzhaut erzeugen kann. Vorteilhafterweise kann als Erfassungseinrichtung für einen vor dem Fahrzeug liegenden Bereich kostengünstig und funktionell eine Weiterbildung eines nach vorne ausgerichteten Kamerasystems des Fahrzeuges, wie beispielsweise eines Lane-Departure-Warning Systems, benutzt werden. Vorzugsweise wird die Erfassungseinrichtung für hinter dem Fahrzeug liegende Bereiche kostengünstig und funktionell als eine Weiterbildung einer Rückfahrkamera ausgestaltet. Da die genannten Kamerasysteme bereits über leistungsvolle Bildverarbeitungseinheiten verfügen, kann die Erfindung oder ihre Ausgestaltungen dadurch mit geringem Aufwand realisiert werden.

Insbesondere bei einer Integration der Abbildungseinrichtung und/oder der Erfassungseinrichtung in einen Seitenspiegel des Kraftfahrzeuges ist vorzugsweise vorgesehen, basierend auf dem Unterschied zwischen zeitlich aufeinander folgend erfassten Abbildern des Strahlungsmusters ein dem Öffnen einer Fahrzeugtüre entgegenstehendes Hindernis zu detektieren.

Besonders bevorzugt ist vorgesehen, dass die Zeit zwischen dem aufeinander folgenden Erzeugen von Abbildern des Strahlungsmusters und/oder aufeinander folgenden Erfassen von durch die Umgebung beeinflussten Abbildern des Strahlungsmusters von der Fahrzeugbewegung abhängt, beispielsweise derart, dass wiederholt nach einer Bewegung des Fahrzeuges um eine vorgegebene Strecke von beispielsweise 10 bis 50 Zentimeter ein Erzeugen eines Abbildes und/oder ein Erfassen eines Abbildes ausgelöst wird. Die Vermessung der vorgegebenen Strecke kann beispielsweise mittels im Fahrzeug vorhandener Radsensoren durchgeführt werden. Zusätzlich kann die Strecke zwischen zwei benachbarten Erfassungen der Umgebung vom aktuellen Geschwindigkeitsbereich des Fahrzeuges abhängig gemacht werden. Dadurch kann ein Einparken und Rangieren mit hohen Anforderungen an die Genauigkeit der Hinderniserfassung und eine Umfelderfassung, beispielsweise für Pre-Crash-Anwendungen für den höheren Geschwindigkeitsbereich mit höheren Anforderungen an die Realzeitfähigkeit unterstützt werden.

Vorzugsweise werden basierend auf zeitlich aufeinander folgend erfassten Abbildern des Strahlungsmusters, der Zeit zwischen dem aufeinander folgenden Erfassen der Abbilder und der Fahrzeuggeschwindigkeit Informationen über die Fahrzeugumgebung, insbesondere über Vorhandensein, Größe, Form und Relativgeschwindigkeit der Hindernisse in der Umgebung des Fahrzeuges gewonnen, welche als Grundlage für die Auslösung automatischer Warnfunktionen und / oder den Eingriff in die Dynamik eines Fahrzeuges weiterverarbeitet werden können.

Im Folgenden wird die Erfindung anhand von Beispielen unter Bezugnahme auf die folgenden Figuren näher erläutert:
- Figur 1: zeigt eine prinzipielle Darstellung eines Kraftfahrzeuges samt Sicherheitsring ohne Hindernis;
- Figur 2: zeigt eine Prinzipdarstellung der Hinderniserkennung
- Figur 3: zeigt eine prinzipielle Darstellung eines Kraftfahrzeuges samt Sicherheitsring mit Hindernis;
- Figur 4: zeigt eine vereinfachte Schnittdarstellung eines Teils eines Kraftfahrzeuges samt eines Seitenspiegels mit darin integrierter Abbildungseinrichtung und Erfassungseinrichtung;
- Figur 5: zeigt sich überlagernde Strahlungsmuster.

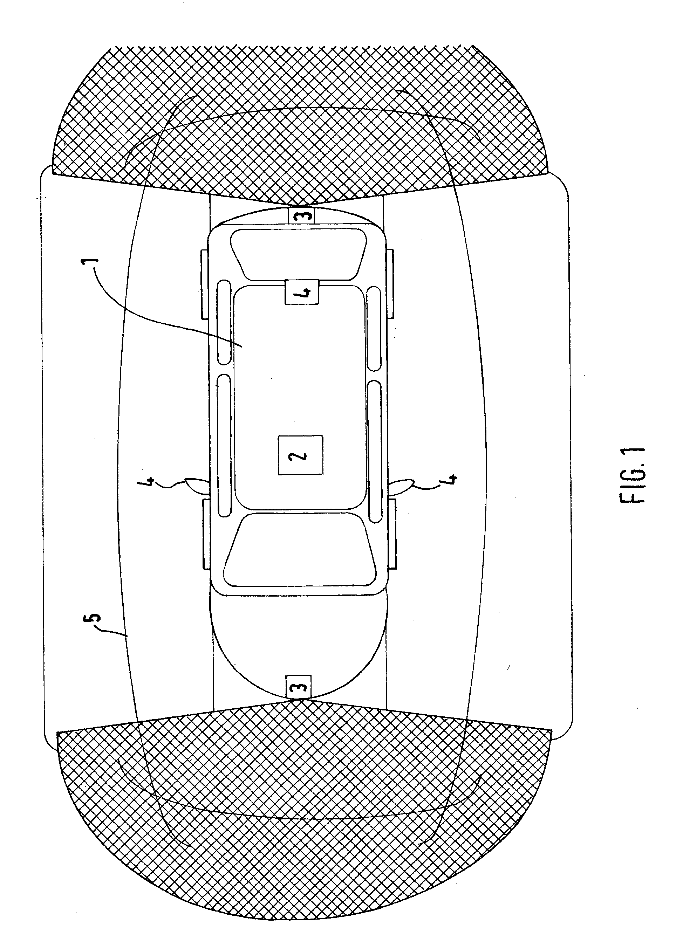

Figur 1 zeigt von oben schematisch ein Kraftfahrzeug 1 mit einer Prozessoreinrichtung 2 und einer damit gekoppelten Abbildungseinrichtung 3 (kann aus mehreren Teileinrichtungen bestehen) und einer damit gekoppelten Erfassungseinrichtung 4 (kann aus mehreren Teileinrichtungen bestehen).

Die Abbildungseinrichtung 3 erzeugt als Abbild eines Strahlungsmusters eine Linie 5 um das Kraftfahrzeug herum.

Durch die Erfassungseinrichtung 4 werden zeitlich nacheinander mehrere durch die Fahrzeugumgebung beeinflusste Abbilder 5 oder Teil-Abbilder (bei Einsatz mehrerer Erfassungsteileinrichtungen) des Strahlungsmusters erfasst (gegebenenfalls unter Verwendung einer Bildfusion bei Einsatz mehrerer Erfassungsteileinrichtungen).

Die Prozessoreinrichtung 2, die eine Bildverarbeitungsvorrichtung enthalten kann, ist derart ausgestaltet, dass basierend auf dem Unterschied zwischen zeitlich aufeinander folgend erfassten Abbildern des Strahlungsmusters ein Hindernis in dem Gelände detektiert wird.

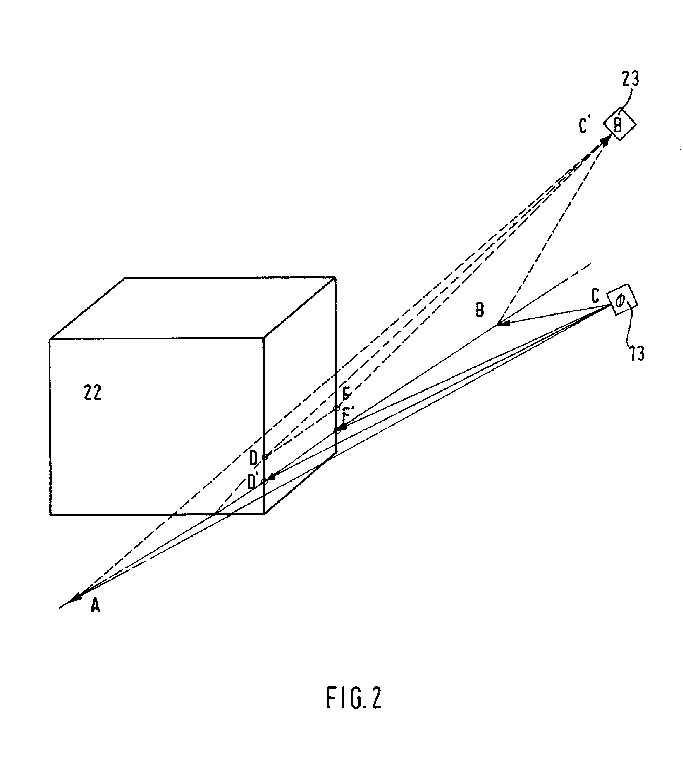

Figur 2 zeigt das Prinzip der Hinderniserkennung. Die Abbildungseinrichtung 21 projiziert in die Umgebung des Kraftfahrzeuges eine Linie AB aus dem Punkt C. Die Linie trifft auf das Hindernis 22. Die Erfassungseinrichtung 23 registriert die Krümmung aus der Perspektive C' dadurch, dass sich der Teilabschnitt der erfassten Linien DF im Vergleich zu der vorherigen Aufnahme zu den Punkten D'F' hin verschoben hat.

Überschreitet der Unterschied, beispielsweise der maximale Versatz, zwischen zeitlich (mittelbar oder unmittelbar) nacheinander erfassten Abbildern im Koordinatensystem des Kraftfahrzeuges eine vorgegebene Schwelle, so wird ein Hindernis angenommen.

Durch die Information über die Bewegung des Kraftfahrzeuges und der Veränderung der Krümmung zwischen zwei oder mehreren Bilderfassungen kann die Höhe der Hindernisse oder ggf. die Tiefe von Schlaglöchern errechnet werden. Außerdem kann der Bewegungsvektor eines beispielsweise quer zum Fahrzeug beweglichen Objekts gemessen werden, falls seine Schnittmenge mit dem Sicherheitsring sich quer zur Fahrtrichtung verschiebt.

Im Falle eines Objekts, welches sich quer zur vorausberechneten Fahrbahn des Fahrzeuges bewegt, und bei einer Krümmung der Linien, die in etwa der Krümmung, die auf die Form und Bewegungseigenschaften menschlicher Beine hindeuten, kann das System automatisch einen Fußgänger erkennen, der beispielsweise die vorausberechnete Trajektorie des Fahrzeuges kreuzt. In diesem Fall kann das erfindungsgemäße System eine Warnung an den Kraftfahrer ausgeben und / oder einen automatischen oder teilautomatischen Bremsvorgang oder ein automatisches oder teilautomatisches Ausweichmanöver einleiten.

Neben der beschriebenen automatischen Erfassung und Verarbeitung eines Abbildes des Strahlungsmusters kann das erfasste Abbild auch auf einem Display des Fahrzeuges dargestellt werden und / oder, falls das Strahlungsmuster auf sichtbaren Strahlen basiert, durch einen Fahrzeugnutzer im Spiegel oder Kamerabild unmittelbar beobachtet werden. Somit kann er auch bei einer nicht ausgeleuchteten Seite des Fahrzeuges die Annäherung an ein dunkles Hindernis beim Rangieren durch die Veränderung der Form des Strahlenmusters bemerken. Die Einrichtung kann beispielsweise auch zur präzisen Positionierung des Kraftfahrzeuges, beispielsweise parallel und in einem vorgegebenen Abstand heben einer Bordsteinkante oder einem anderen Fahrzeug, benutzt werden.

Eine nicht dargestellte Ausführungsvariante sieht verschiedene Sicherheitszonen vor, die jeweils verschiedene Bereiche um das Kraftfahrzeug abdecken. So kann beispielsweise zwischen einem "gefährlichen Nahbereich" (ein Meter breiter Bereich unmittelbar um das Fahrzeug herum) und einem "mittelgefährlichen Nahbereich " (zwei Meter breiter Bereich unmittelbar um das Fahrzeug) unterschieden werden, wobei die Strahlungsmuster der beiden Bereiche hinsichtlich Farbe/Wellenlänge und/oder Form des Strahlungsmusters (beispielsweise Linie, Doppellinie oder Strichpunktlinie) zur besseren Unterscheidbarkeit verschieden sein können.

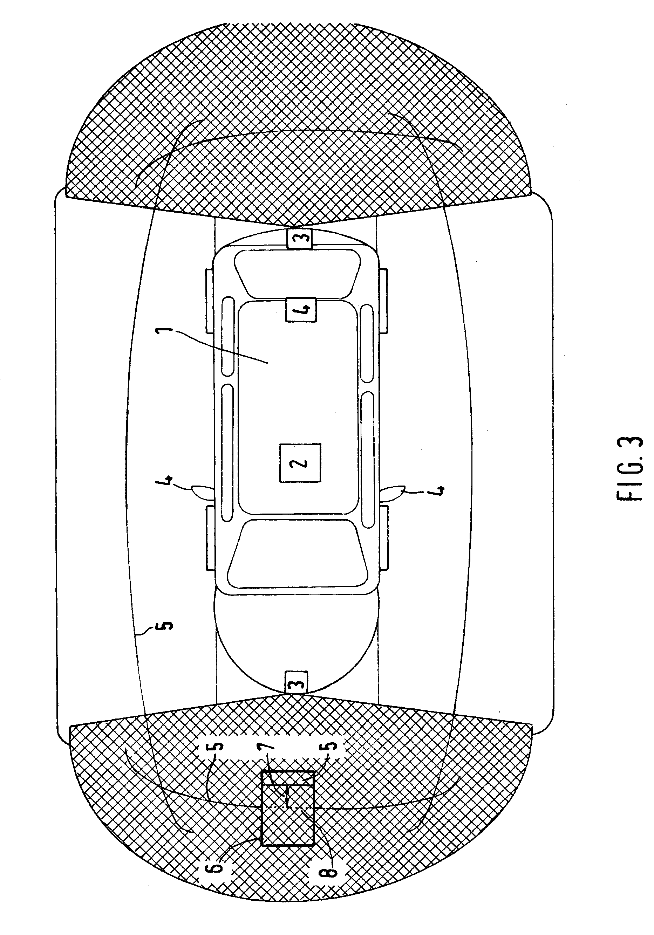

Figur 3 zeigt das Kraftfahrzeug 1 samt Sicherheitsring 5 aus Figur 1 bei der Annäherung an ein Hindernis 6. Das Abbild 5 des Strahlungsmusters ändert sich aufgrund des Hindernisses 6. Das Abbild 8 des Strahlungsmusters ohne Hindernis ist an dieser Stelle noch einmal gestrichelt dargestellt, um den Unterschied 7 zwischen zeitlich aufeinander folgend erfassten Abbildern des Strahlungsmusters zu veranschaulichen.

Ein Hindernis in einer Sicherheitszone um das Fahrzeug herum kann also dadurch erkannt werden, dass sich der Abstand zwischen beispielsweise vier in der Umgebung des Fahrzeuges gezeichneten Linien (oder Breite eines beispielsweise staffierten Rechtecks) nach einer bestimmten Gesetzmäßigkeit verändert.

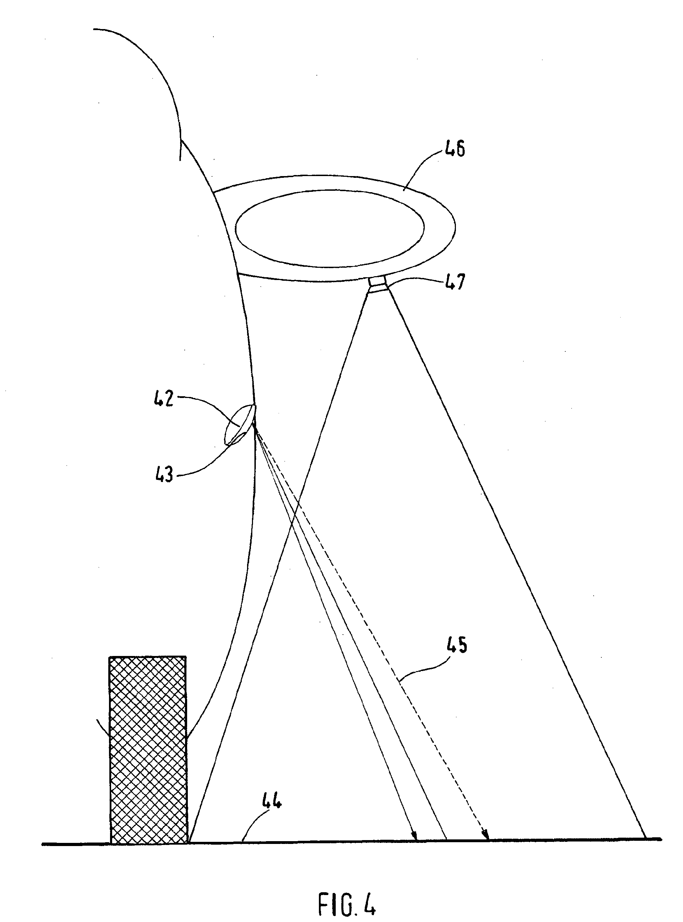

Die Figur 4 zeigt eine Abbildungseinrichtung 43 in Form eines Lasers, die im Türgriff 42 eines Fahrzeuges zusammen mit einer Vorfeldbeleuchtung verbaut ist. Die Abbildungseinrichtung 43 verfügt über eine spezielle Optik, die den Laserstrahl in einer oder zwei Dimensionen streut und so eine leicht gekrümmte Linie 45 auf die Fahrbahn 44 abbildet.

Als Erfassungseinrichtung wird die im Außenspiegel 46 eingebaute Top-View-Kamera 47 und deren Bildverarbeitungseinheit benutzt. Der Erfassungswinkel der Kamera ist so dimensioniert, dass diese die Abbildung der Strahlen auf der Fahrbahn auch dann erfassen kann, wenn diese sich beim Auftreffen auf ein Hindernis oder ein Schlagloch verformen.

Die Abbildungsvorrichtung 47 kann auch auf einem einfachen Laserstrahler basieren, der mittels eines elektromagnetisch oder piezoelektrisch angetriebenen optischen Körpers oder mittels eines Spiegelelements in eine schnelle Bewegung versetzt wird, so dass der Laserstrahl als eine gerade oder nach Vorgaben gekrümmte Linie beispielsweise entlang einer Fahrzeugseite dargestellt wird. Ein hinreichend schnell beweglicher Laserpunkt wird dabei sowohl für das menschliche Auge als auch bei der Erfassung mittels einer Kamera als durchgehende Linie bzw. eine andere vorgegebene zweidimensionale Figur erscheinen.

Bei der Erfassung eines solchen Abbilds ergeben sich Vorteile gegenüber einer klassischen Objekterkennung mittels einer Kamera. In der Regel muss das zu erkennbare Objekt für eine erfolgreiche automatische Objekterkennung hinreichend ausgeleuchtet sein, Kanten oder Texturen enthalten, oder bestimmte deutlich von der Umgebung abweichende Eigenschaften besitzen. Dagegen ist die automatische Erkennung einer im infraroten Spektralbereich leuchtenden Linie auf der Fahrbahn oder auf Hindernissen gemäß der Erfindung einfacher zu realisieren als die Erkennung bzw. Vermessung von willkürlich geformten nicht A-priori bekannten und willkürlich gefärbten Gegenständen. Die Abbildung der Linien kann hingegen sehr einfach ausgeführt sein. Die Abbilder der Strahlungsmuster können automatisch von übrigen Bildelementen auch bei verschiedenen Beleuchtungsszenarien mittels Segmentierung unterschieden werden. Die Durchführung der Segmentierung ist bei einer geometrisch zusammenhängenden Figur deutlich einfacher als beispielsweise im Falle von einzelnen Punkten. Insbesondere die Zuverlässigkeit der automatischen Erkennung einer zusammenhängenden geometrischen Figur ist deutlich höher als bei Einzelpunkten, da die erkannte Position benachbarter Teile der Figur mittels Interpolationsverfahren gegenseitig plausibilisiert werden kann.

Da die Linie (Abbildungsmuster) beim Auftreffen auf die Hindernisse aus der Perspektive der erfassenden Einrichtung bestimmten lokalen Krümmungen oder Versetzungen unterzogen wird, ist das Maß dieser Krümmung mit einem einfachen Algorithmus messbar. Die Form, Stärke und Position der durch die Erfassungseinrichtung zu einem oder mehreren Zeitpunkten erfassten Krümmung (und gegebenenfalls der Versatz) erlaubt den Rückschluss auf das Verhalten und die relative Geschwindigkeit der Hindernisse einschl. Quergeschwindigkeit relativ zu dem Fahrzeug.

Darüber hinaus kann das erfindungsgemäße System zur automatischen Orientierung des Fahrzeuges gegenüber A-priori bekannten Objekten eingesetzt werden. Wird beispielsweise die Garageneinfahrt, eine enge Durchfahrt oder ein Stammparkplatz des Fahrers mit einem speziellen eindeutig zu erkennenden Muster versehen, kann dieses durch das erfindungsgemäße System eindeutig erkannt werden. Das Muster kann beispielsweise als ein Relief beispielsweise vor einer Garage, einer engen Einfahrt, etc. ausgestaltet sein, welches eine leicht zu erkennende Kombination aus Krümmungen beispielsweise einer Linie bewirkt. Dieses Muster kann beispielsweise beim erstmaligen Befahren der Engstelle auf die Betätigung eines Bedienelements hin in einer Speichereinrichtung des Kraftfahrzeuges abgespeichert werden. Die gewonnenen Daten über die Position des Fahrzeuges relativ zu dem Muster können als Einhaltspunkt für automatische Orientierung und / oder zur Ausführung automatisierter Aktionen, beispielsweise zu einer automatischen Einfahrt in die Garage bzw. eine Durchfahrt durch Engstellen, eingesetzt werden.

Ein erfindungsgemäßes Kraftfahrzeug kann auch zum Scannen der vorgegebenen Informationen nach dem Prinzip der Strichkodierung eingesetzt werden. Die Strichkodierung kann beispielsweise vor der Einfahrt in eine Tankstelle, eine Tiefgarage oder eine ökologisch geschützte Zone beispielsweise am Boden als ein Relief angeordnet sein und Informationen mit beispielsweise vorgegebenen Einstellungen für das Fahrzeug oder eine Information für den Fahrer wie beispielsweise ein Geschwindigkeitslimit enthalten. Diese Informationen können vom erfindungsgemäßen Fahrzeug automatisch übernommen und weiterverarbeitet und / oder angezeigt werden.

Der Vorteil gegenüber dem bekannten Prinzip der Strichkodierung liegt in einer weitgehend freien Wahl des Musters und der Zuordnung der gewünschten Einstellungen beispielsweise durch den Fahrzeugbenutzer.

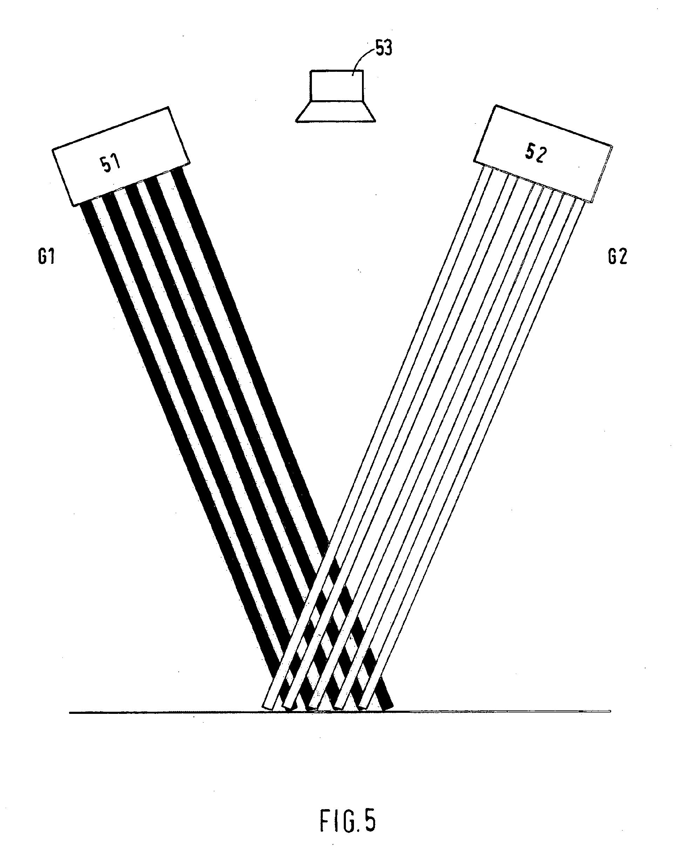

Bei einer anderen Ausgestaltung des erfindungsgemäßen Systems können, wie in Figur 5 gezeigt, zwei Strahlungsmuster aus leicht versetzten Verbaupositionen 51 und 52 als ineinander greifende Gitter G1, G2 in die Umgebung des Fahrzeuges abgestrahlt werden. Anhand des Abbildes des resultierenden Musters in der Umgebung eines Fahrzeuges beispielsweise auf einem Hindernis kann der Abstand zu den betreffenden Teilen der Umgebung errechnet werden.

Bei dieser Ausgestaltung des erfindungsgemäßen Systems können die Strahlungsmuster mittels LEDs erzeugt werden, die mit einer speziellen Maske, beispielsweise einer Gitterstruktur, versehen werden.

Bei dieser Ausgestaltung der erfindungsgemäßen Einrichtung können ineinander greifende Gitter bevorzugt aus Farbstreifen erzeugt werden, wobei die Farbe bzw. Wellenlänge eines Gitters sich von der Wellenlänge des anderen Gitters unterscheidet. Somit können diese beispielsweise mittels eines Kamerasystems leicht unterschieden werden. Das Abbild dieser beiden Gitter auf einem Hindernis enthält die Information über den Abstand zu diesem.

Eines oder beide oben beschriebene Gitter können auch "negativ" ausgeführt sein. Das bedeutet die Bildung beispielsweise linienförmiger Schatten in einem im Wesentlichen ausgeleuchteten Umfeld. Beleuchtete und nicht beleuchtete Bereiche des Umfeldes können mittels eines sehr einfachen Segmentierungsalgorithmus unterschieden werden. Ein Schattenmuster wird beim Auftreffen auf die Hindernisse denselben geometrischen Krümmungen unterzogen, wie ein Lichtmuster. Die Erfassung dieser Verformungen lässt sich zur Ortung und Klassifikation der Hindernisse benutzen.

Insbesondere bei der automatischen Erkennung von gefärbten Gegenständen und Flächen mit ungleichmäßigen Reflexionseigenschaften, kann es dazu kommen, dass eine der Farben (Wellenlängen) nur stark geschwächt von dem Objekt reflektiert wird. Um dem vorzubeugen, können beide Abbildungsvorrichtungen ihre Wellenlängen z.B. zyklisch umschalten, was die Erfassungseinrichtung wiederum zur Kompensation der störenden Reflektionseigenschaften benutzen kann. Dies kann beispielsweise durch mehrfarbige LEDs realisiert werden.

Vorteilhafterweise kann durch die Bildung eines langzeitigen Durchschnittwertes des Abstandes zwischen den Fahrzeugteilen, welche die Abbildungseinrichtung und die erfassende Einrichtung beinhalten, und der Fahrbahn die Lage des Fahrzeuges relativ zur Fahrbahn errechnet werden. Durch die Bildung eines Mittelwertes des Abstandes zur Fahrbahn bspw. auf einer Strecke von einigen Kilometer, werden die kurzzeitigen Einflüsse der Hindernisse, die in dieser Zeit detektiert werden, lediglich einen vernachlässigbar kleinen Einfluss auf den Mittelwert haben. Größere zeitlich beschränkte Abweichungen können aus der Mittelwertbildung ausgeschlossen werden. Weicht der Mittelwert von dem Sollwert (welcher bspw. mittels Referenzdaten gespeichert werden kann) ab, kann eine veränderte Lage des Fahrzeuges relativ zur Fahrbahnebene angenommen werden. Eine veränderte Lage des Fahrzeuges kann aufgrund von bspw. einem zu niedrigen Reifendruck, oder sonstiger Defekte im Fahrzeug entstehen. Die Information über einen bspw. zu niedrigen oder ungleichmäßigen Reifendruck kann dem Fahrer des Kraftfahrzeuges angezeigt werden oder in den Algorithmen zur Regelung des Fahrwerks berücksichtigt werden.

## Patentansprüche

1. Kraftfahrzeug mit
- einer Abbildungseinrichtung zum Erzeugen eines Abbildes eines Strahlungsmusters in der Umgebung des Kraftfahrzeuges,
- einer Erfassungseinrichtung zum mehrfachen zeitlich aufeinander folgenden Erfassen von durch die Umgebung beeinflussten Abbildern des Strahlungsmusters, wobei die Erfassungseinrichtung mit einer Strahlungsquelle der Abbildungsvorrichtung synchronisiert ist, und
- einer Prozessoreinrichtung, die derart eingerichtet ist,
- dass basierend auf dem Unterschied zwischen zeitlich unmittelbar oder mittelbar aufeinander folgend erfassten Abbildern des Strahlungsmusters ein Hindernis in der Umgebung detektiert wird, und dass bei stehendem Kraftfahrzeug basierend auf dem Unterschied zwischen unmittelbar oder mittelbar zeitlich aufeinander folgend erfassten Abbildern des Strahlungsmusters eine Diebstahgefahr angenommen wird, und ein entsprechendes Warnsignal generiert wird.

2. Kraftfahrzeug nach Anspruch 1,
bei dem die Abbildungseinrichtung derart eingerichtet ist, dass das Abbild des Strahlungsmusters einen im Wesentlichen geschlossenen Ring um das Kraftfahrzeug bildet.

3. Kraftfahrzeug nach einem der vorhergehenden Ansprüche,
bei dem die Prozessoreinrichtung derart eingerichtet ist, dass ein dem Kraftfahrzeug zugeordnetes Strahlungsmuster dadurch erkannt wird, dass das erfasste Abbild hinsichtlich seiner Gestalt, insbesondere Krümmung, dem erzeugten Abbild entspricht.

4. Kraftfahrzeug nach einem der vorhergehenden Ansprüche,
bei dem die Abbildungseinrichtung und/oder die Erfassungseinrichtung zumindest teilweise in einem Türgriff des Kraftfahrzeuges, insbesondere zusammen mit einer Vorfeldbeleuchtung, verbaut sind.

5. Kraftfahrzeug nach einem der vorhergehenden Ansprüche,
bei dem die Abbildungseinrichtung zumindest teilweise in einem Zierelement verbaut ist.

6. Kraftfahrzeug nach einem der vorhergehenden Ansprüche,
bei dem die Erfassungseinrichtung in einem Seitenspiegel des Kraftfahrzeuges, insbesondere zusammen mit einer Top-View-Kamera und/oder einer Rückfahrkamera und/oder einer nach vorne ausgerichteten Kamera, realisiert ist.

7. Kraftfahrzeug nach einem der vorhergehenden Ansprüche,
bei dem das Strahlungsmuster durch zwei Abbildungsteileinrichtungen erzeugt wird, wobei jede Abbildungsteileinrichtung ein mehrere parallele Linien aufweisendes Strahlungsteilmuster erzeugt, die sich gegenseitig überlagern.

8. Kraftfahrzeug nach einem der vorhergehenden Ansprüche,
bei dem, insbesondere bei einer Integration der Abbildungseinrichtung und/oder der Erfassungseinrichtung in einen Seitenspiegel des Kraftfahrzeuges, basierend auf dem Unterschied zwischen zeitlich aufeinander folgend erfassten Abbildern des Strahlungsmusters ein dem Öffnen einer Fahrzeugtüre entgegenstehendes Hindernis detektiert wird.

9. Kraftfahrzeug nach einem der vorhergehenden Ansprüche,
bei dem die Erkennung der Hindernisse auf dem Vergleich der Verschiebung des Abbildes des Strahlungsmusters und der Verschiebung sonstiger Texturen und / oder Kanten in dem durch die Erfassungseinrichtung erfassten Bild basiert.

10. Kraftfahrzeug nach einem der vorhergehenden Ansprüche,
bei dem basierend auf zeitlich unmittelbar oder mittelbar aufeinander folgenden erfassten Abbildern des Strahlungsmusters eine automatische Klassifikation der Hindernisse durchgeführt wird.

## Claims

1. A motor vehicle with
- an imaging device for producing an image of a radiation pattern in the environment of the motor vehicle,
- a recording device for the repeated chronologically sequential recording of images of the radiation pattern influenced by the environment, wherein the recording device is synchronised with a radiation source of the imaging mechanism, and
- a processor device, which is set up in such a way
- that, based on the difference between chronologically directly or indirectly sequentially recorded images of the radiation pattern, an obstacle in the environment is recorded, and in that, when the motor vehicle is stationary, based on the difference between directly or indirectly chronologically sequentially recorded images of the radiation pattern, a risk of theft is assumed, and a corresponding alarm signal is generated.

2. A motor vehicle according to claim 1, wherein the imaging device is set up in such a way that the image of the radiation pattern forms a substantially closed ring around the motor vehicle.

3. A motor vehicle according to any one of the preceding claims, wherein the processor device is set up in such a way that a radiation pattern associated with the motor vehicle is recognised, in that the recorded image corresponds to the image produced with respect to its form, more especially curvature.

4. A motor vehicle according to any one of the preceding claims, wherein the imaging device and/or the recording device are at least partially installed in a door handle of the motor vehicle, more especially together with a front end lighting device.

5. A motor vehicle according to any one of the preceding claims, wherein the imaging device is at least partially installed in a decorative element.

6. A motor vehicle according to any one of the preceding claims, wherein the recording device is realised in a wing mirror of the motor vehicle, more especially together with a top view camera, and/or a rear-view back-up camera and/or a camera oriented to the front.

7. A motor vehicle according to any one of the preceding claims, wherein the radiation pattern is produced by two imaging part devices, each imaging part device producing a radiation pattern, which has a plurality of parallel lines, which are mutually superimposed.

8. A motor vehicle according to any one of the preceding claims, wherein, more especially upon an integration of the imaging device and/or the recording device in a wing mirror of the motor vehicle, based on the difference between chronologically sequentially recorded images of the radiation pattern, an obstacle counteracting the opening of a vehicle door is detected.

9. A motor vehicle according to any one of the preceding claims, wherein the recognition of the obstacles is based on the comparison of the displacement of the image of the radiation pattern and the displacement of other textures and/or edges in the image recorded by the recording device.

10. A motor vehicle according to any one of the preceding claims, wherein, based on chronologically directly or indirectly sequentially recorded images of the radiation pattern, an automatic classification of the obstacles is carried out.

## Revendications

1. Véhicule automobile comportant :
- un dispositif de reproduction permettant d'obtenir une reproduction d'un modèle de rayonnement dans l'environnement du véhicule,
- un dispositif de détection pour permettre la détection successive chronologique multiple de représentations du modèle de rayonnement influencées par l'environnement,
- le dispositif de détection étant synchronisé avec une source de rayonnement du dispositif de reproduction, et
- un dispositif de processeur qui est réalisé de sorte que
- à partir de la différence entre des reproductions du modèle de rayonnement détectées successivement dans le temps directement ou indirectement un obstacle d'environnement est détecté, et lorsque le véhicule est immobilisé, à partir de la différence entre des représentations du modèle de rayonnement détectées successivement dans le temps directement ou indirectement, un risque d'effraction est déterminé, et un signal d'avertissement correspondant est généré.

2. Véhicule conforme à la revendication 1, dans lequel le dispositif de reproduction est réalisé de sorte que la reproduction du modèle de rayonnement forme un anneau essentiellement fermé autour du véhicule.

3. Véhicule conforme à l'une des revendications précédentes, dans lequel le dispositif de processeur est réalisé de sorte qu'un modèle de rayonnement associé au véhicule soit reconnu pour que la reproduction détectée corresponde à la reproduction obtenue en ce qui concerne sa configuration en particulier sa courbure.

4. Véhicule conforme à l'une des revendications précédentes, dans lequel le dispositif de reproduction et/ou le dispositif de détection sont montés au moins en partie dans une poignée de porte du véhicule, en particulier conjointement avec un éclairage de l'environnement.

5. Véhicule conforme à l'une des revendications précédentes, dans lequel le dispositif de reproduction est monté au moins partiellement dans un élément de décoration.

6. Véhicule conforme à l'une des revendications précédentes, dans lequel le dispositif de détection est réalisé dans un rétroviseur latéral du véhicule, en particulier conjointement à une caméra top view et/ou une caméra de recul et/ou une caméra orientée vers l'avant.

7. Véhicule conforme à l'une des revendications précédentes, dans lequel le modèle de rayonnement est produit par deux dispositifs de reproduction partiels, chacun de ces dispositifs de reproduction partiels produisant un modèle de rayonnement partiel comportant plusieurs lignes parallèles qui se superposent.

8. Véhicule conforme à l'une des revendications précédentes, dans lequel, en particulier dans le cas d'une intégration du dispositif de reproduction et/ou du dispositif de détection dans un rétroviseur latéral du véhicule, à partir de la différence entre deux reproductions du modèle de rayonnement détectées successivement dans le temps un obstacle s'opposant à l'ouverture d'une porte du véhicule est détecté.

9. Véhicule conforme à l'une des revendications précédentes, dans lequel la reconnaissance d'un obstacle est basée sur la comparaison du décalage de la reproduction du modèle de rayonnement et du décalage de textures et/ou d'arêtes habituel dans l'image détectée par le dispositif de détection.

10. Véhicule conforme à l'une des revendications précédentes, dans lequel à partir de reproductions du modèle de rayonnement détectées successivement dans le temps directement ou indirectement, une classification automatique des obstacles est effectuée.
